(19) Europäisches Patentamt / European Patent Office / Office européen des brevets

(11) **EP 1 525 277 B1**

(12) **FASCICULE DE BREVET EUROPEEN**

(45) Date de publication et mention de la délivrance du brevet:
**26.04.2017 Bulletin 2017/17**

(21) Numéro de dépôt: **03755655.2**

(22) Date de dépôt: **16.07.2003**

(51) Int Cl.:
***D06M 15/643*** *(2006.01)* ***D06M 15/693*** *(2006.01)*
***D06N 3/12*** *(2006.01)* ***C09D 183/04*** *(2006.01)*

(86) Numéro de dépôt international:
**PCT/FR2003/050017**

(87) Numéro de publication internationale:
**WO 2004/013241 (12.02.2004 Gazette 2004/07)**

(54) **COMPOSITION D HUILES SILICONE RETICULABLES EN ELASTOMERES POUR LE TRAITEMENT PAR IMPREGNATION DE MATERIAUX FIBREUX**

IZU-ELASTOMERE VERNETZBARE SILIKONÖLZUSAMMENSETZUNGEN ZUM IMPRÄGNIEREN VON FASERIGEN GEGENSTÄNDEN

COMPOSITION OF CROSSLINKABLE ELASTOMER SILICONE OILS FOR TREATMENT BY IMPREGNATION OF FIBROUS MATERIALS

(84) Etats contractants désignés:
**AT BE BG CH CY CZ DE DK EE ES FI FR GB GR HU IE IT LI LU MC NL PT RO SE SI SK TR**

(30) Priorité: **30.07.2002 FR 0209676**

(43) Date de publication de la demande:
**27.04.2005 Bulletin 2005/17**

(73) Titulaire: **Bluestar Silicones France SAS**
**69003 Lyon (FR)**

(72) Inventeurs:
- **POUCHELON, Alain**
**69330 MEYZIEU (FR)**
- **QUEMIN, Maryline**
**69003 LYON (FR)**
- **LAFAYSSE, Francis**
**69230 Saint-Genis Laval (FR)**

(74) Mandataire: **Cabinet Plasseraud**
**66 rue de la Chaussée d'Antin**
**75440 Paris Cedex 09 (FR)**

(56) Documents cités:
**EP-A- 0 764 702**
**EP-A- 0 773 262**
**EP-A- 0 846 720**
**EP-A- 1 078 823**
**EP-B- 0 543 401**
**EP-B- 0 553 840**
**EP-B- 0 718 432**

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 525 277 B1

## Description

L'invention décrit une composition silicone élastomère vulcanisable par hydrosilylation (polyaddition), notamment du type bicomposant (dite RTV-2), utilisable pour le traitement de matériaux fibreux (en particulier des supports souples tels que des supports tissés ou des supports non-tissés.

L'invention concerne un composite constitué par un matériau fibreux traité à l'aide d'une composition silicone élastomère notamment de type RTV2.

Le traitement des matériaux fibreux (en particulier des supports souples tels que des supports tissés ou des supports non-tissés), à l'aide de compositions silicones liquides réticulables en élastomères, est classiquement réalisé par enduction et le plus souvent par imprégnation, quand les compositions sont des émulsions ou des solutions.

L'enduction silicone est définie comme l'action d'enduire un support fibreux, notamment un textile, à l'aide d'une composition silicone liquide réticulable, puis de faire réticuler le film enduit sur le support, de façon à produire un revêtement destiné notamment à le protéger, à lui conférer des qualités particulières, par exemple à lui conférer des caractéristiques d'hydrophobie/d'oléophobie, d'imperméabilisation ou des propriétés mécaniques améliorées ou encore propre à en modifier l'aspect.

L'imprégnation est quant à elle définie comme l'action de faire pénétrer un liquide très fluide à base de silicone réticulable à l'intérieur d'un support fibreux (pénétration à coeur) puis de faire réticuler le silicone pour conférer au support des propriétés du type de celles évoquées ci-dessus.

En pratique, les enductions d'élastomères silicones sur des supports textiles présentent de nombreux avantages liés aux caractéristiques intrinsèques des silicones. Ces composites présentent notamment une bonne souplesse, une bonne résistance mécanique et un comportement au feu amélioré.

Par ailleurs, à la différence des élastomères traditionnels, les silicones leur confèrent entre autres une protection appropriée du fait de leur hydrophobie et de leur excellente résistance aux agressions chimiques, thermiques et climatiques ainsi qu'une forte longévité.

Cependant, dans le domaine émergent des composites siliconés pour l'architecture textile, le mode de dépose des silicones par enduction peut présenter des insuffisances. En effet, les tissus architecturaux exposés aux intempéries ne doivent pas présenter d'effet de remontée capillaire depuis les bordures, ce qui nuirait à leur esthétique et à leur durée de vie. Or, l'enduction ne représente pas une technique efficace pour la protection de matériaux fibreux vis-à-vis du phénomène de remontée capillaire.

Pour pallier cela, il était a priori concevable de recourir à la technique d'imprégnation des matériaux fibreux, au moyen de compositions silicones liquides, par exemple de type RTV-2, réticulables en élastomères.

Mais jusqu'alors les seules compositions silicones liquides connues pour réaliser des imprégnations de supports souples, tels des textiles ou des toiles non tissées, sont des solutions ou des émulsions silicones fluides.

En fait, il existait avant l'invention un préjugé technique selon lequel les compositions silicones liquides constituées par des huiles silicones par exemple de type RTV-2, ne pouvaient pas être utilisées pour l'imprégnation de supports fibreux.

EP1078823 décrit des compositions silicones d'enduction de tissu d'airbag comprenant une silice précipitée.

Nonobstant cela, les inventeurs ont cherché à mettre au point une composition silicone liquide à base d'huile(s), réticulable en élastomère, pour le traitement au moins par imprégnation de matériaux fibreux (tissés ou non-tissés), traités à coeur et en surface de manière à présenter des propriétés améliorées en terme de renfort mécanique, d'hydrofugation, d'imperméabilisation, d'aspect, d'ignifugation et surtout de résistance à la remontée capillaire.

L'autre objectif visé par les inventeurs est la fabrication de composites de matériau fibreux et de silicone ayant de bonnes propriétés mécaniques et de résistance à la remontée capillaire, ces composites étant susceptibles d'être produits par imprégnation à l'aide de la composition selon l'invention.

Ces objectifs, parmi d'autres, ont été atteints par les inventeurs qui ont découvert, de façon tout à fait surprenante, et malgré le préjugé technique précité, qu'une composition silicone liquide, dont la phase liquide est essentiellement voire exclusivement formée par une ou plusieurs huile(s) silicones réticulables, notamment à froid, en élastomère, pouvait être utilisée pour le traitement par imprégnation de supports fibreux, pour leur conférer des propriétés mécaniques et des propriétés de résistance aux remontées capillaires très satisfaisantes.

D'où il s'ensuit que l'invention concerne un composite comprenant au moins un support fibreux, à l'exclusion de tout textile architectural, imprégné à coeur d'élastomère silicone, ledit composite étant obtenu par :

- imprégnation du support fibreux avec une composition silicone, réticulable en élastomère, consistant en:

  (a) au moins un polyorganosiloxane (POS) présentant, par molécule, au moins deux groupes alcényles, de préférence en $C_2$-$C_6$ liés au silicium ;

  (b) au moins un polyorganosiloxane présentant, par molécule, au moins trois atomes d'hydrogène liés au silicium ;

(c) une quantité catalytiquement efficace d'au moins un catalyseur, de préférence composé d'au moins un métal appartenant au groupe du platine ;
(d) au moins un promoteur d'adhérence ;
(f) au moins un inhibiteur de réticulation ;
(g) au moins une résine polyorganosiloxane comportant au moins un reste alcényle dans sa structure, et présentant une teneur pondérale en groupe(s) alcényle(s) comprise entre 0,1 et 20 % en poids ;
(h) éventuellement des additifs fonctionnels pour conférer des propriétés spécifiques choisis parmi les pigments/colorants et les stabilisants;

→ présentant une viscosité dynamique comprise entre 1000 et 7000 mPa.s, à 25°C, et plus préférentiellement comprise entre 2000 et 5000 mPa.s à 25°C avant réticulation,
→ présentant, après réticulation complète par une cuisson en étuve ventilée de 30 minutes à 150°C, au moins l'une des propriétés mécaniques suivantes :

- une dureté Shore A au moins égale à 2, de préférence comprise entre 5 et 65 ;
- une résistance à la rupture au moins égale à 0,5 $N.mm^{-1}$, de préférence au moins égale à 1,0 $N.mm^{-1}$ et plus préférentiellement au moins égale à 2 $N.mm^{-1}$
- une élongation à la rupture au moins égale à 50 %, de préférence au moins égale à 100 % et plus préférentiellement au moins égale à 200 % ;

▪ réticulation de ladite composition silicone imprégnant le support.

Toutes les viscosités dont il est question dans la présente demande, correspondent à une grandeur de viscosité dynamique à 25°C, c'est-à-dire la viscosité dynamique qui est mesurée, de manière connue en soi, à un gradient de vitesse de cisaillement suffisamment faible pour que la viscosité mesurée soit indépendante du gradient de vitesse.
De préférence:

→ cette composition est fluide,
→ cette composition est obtenue en ayant recours ni à une dilution, ni à une solubilisation, ni à une émulsification,
→ cette composition est apte à imprégner à coeur un matériau fibreux puis réticuler.

A la connaissance des inventeurs, de telles compositions fluides d'huiles silicone réactives et susceptibles de vulcaniser par polyaddition, n'ont jamais été mises en oeuvre pour l'imprégnation de matériau fibreux.
Cette composition a également ceci de particulier qu'elle est apte à imprégner à coeur un matériau fibreux puis à réticuler de manière à former un composite ayant une remontée capillaire de moins de 20 mm, de préférence de moins de 10 mm et plus préférentiellement encore égale à 0, la remontée capillaire étant mesurée selon un test T.
Les techniques générales de l'imprégnation de matériaux fibreux, notamment de textiles sont bien connues de l'homme du métier. Parmi celles-ci, le foulardage représente une technique particulièrement appropriée au procédé de l'invention.
Avantageusement, cette composition silicone liquide est appliquée tout d'abord par imprégnation puis par enduction à l'aide d'une composition silicone liquide réticulable en élastomère.
Le fait de réaliser un traitement combinant au moins une imprégnation et au moins une enduction silicone est un gage de qualité pour le matériau fibreux dont on cherche à modifier les propriétés, notamment la résistance aux remontées capillaires, sans préjudice aux autres propriétés mécaniques, d'hydrofugation, de résistance au feu, d'aspect.
La fluidité de la composition silicone liquide réticulable d'enduction est identique ou différente de la composition d'imprégnation.
Avantageusement, la fluidité du liquide silicone d'enduction est moindre que celle du liquide silicone d'imprégnation.
Les compositions d'huiles silicone, y compris les compositions fluides d'imprégnation, selon l'invention comprennent un mélange de polyorganosiloxanes (a) et (b).
Les polyorganosiloxanes (a) utilisés dans la présente invention ont de préférence un motif de formule:

$$W_aZ_bSiO_{(4-(a+b))/2} \qquad (a.1)$$

dans laquelle :

- W est un groupe alcényle,
- Z est un groupe hydrocarboné monovalent, exempt d'action défavorable sur l'activité du catalyseur et choisi parmi

les groupes alkyles ayant de 1 à 8 atomes de carbone inclus, éventuellement substitués par au moins un atome d'halogène, et ainsi que parmi les groupes aryles,

- a est 1 ou 2, b est 0,1 ou 2 et a + b est compris entre 1 et 3,
- éventuellement au moins une partie des autres motifs sont des motifs de formule moyenne :

$$Z_cSiO_{(4-c)/2} \qquad (a.2)$$

dans laquelle W a la même signification que ci-dessus et c a une valeur comprise entre 0 et 3.

Le polyorganosiloxane (a) peut être très majoritairement formé de motifs de formule (a.1) ou peut contenir, en outre, des motifs de formule (a.2). De même, il peut présenter une structure linéaire. Son degré de polymérisation est, de préférence, compris entre 2 et 5000.

W est généralement choisi parmi les radicaux méthyle, éthyle et phényle, 60 % molaire au moins des radicaux W étant des radicaux méthyle.

Des exemples de motifs siloxyle de formule (a.1) sont le motif vinyldiméthylsiloxane, le motif vinylphénylméthylsiloxane et le motif vinylsiloxane.

Des exemples de motifs siloxyle de formule (a.2) sont les motifs $SiO_{4/2}$, diméthylsiloxane, méthylphénylsiloxane, diphénylsiloxane, méthylsiloxane et phénylsiloxane.

Des exemples de polyorganosiloxanes (a) sont les diméthylpolysiloxanes à extrémités diméthylvinylsilyle, les copolymères méthylvinyldiméthylpolysiloxanes à extrémités triméthylsilyle, les copolymères méthylvinyldiméthylpolysiloxanes à extrémités diméthylvinylsilyle, les méthylvinylpolysiloxanes cycliques.

La viscosité dynamique $\eta_d$ de ce polyorganosiloxane (a) est comprise entre 0,01 et 200 Pa.s, de préférence entre 0,01 et 100 Pa.s.

De préférence, le POS (a) comprend au moins 98 % de motifs siloxyle D: $-R_2SiO_{2/2}$ avec R répondant à la même définition que W ou Z, ce pourcentage correspondant à un nombre de motifs pour 100 atomes de silicium.

En ce qui concerne les compositions d'huiles de silicone selon l'invention, les compositions préférées de polyorganosiloxane (b) comportent le motif siloxyle de formule :

$$H_d\ Le\ SiO_{(4-(d+e)1/2} \qquad (b.1)$$

dans laquelle :

- L est un groupe hydrocarboné monovalent, exempt d'action défavorable sur l'activité du catalyseur et choisi parmi les groupes alkyles ayant de 1 à 8 atomes de carbone inclus, éventuellement substitués par au moins un atome d'halogène, et ainsi que parmi les groupes aryles ;
- d est 1 ou 2, e est 0, 1 ou 2 et d + e a une valeur comprise entre 1 et 3 ;
- éventuellement, au moins une partie des autres motifs étant des motifs de formule moyenne :

$$L_gSiO_{(4-g)/2} \qquad (b.2)$$

dans laquelle L a la même signification que ci-dessus et g a une valeur comprise entre 0 et 3.

A titre d'exemples de polyorganosiloxane (b), on peut citer le poly(diméthylsiloxane) (méthylhydrogénosiloxy) $\alpha$, $\omega$ diméthylhydrogénosiloxane.

Le polyorganosiloxane (b) peut être uniquement formé de motifs de formule (b.1) ou comporte en plus des motifs de formule (b.2).

Le polyorganosiloxane (b) peut présenter une structure linéaire, ramifiée, cyclique ou en réseau. Le degré de polymérisation est supérieur ou égal à 2. Plus généralement, il est inférieur à 100.

La viscosité dynamique $\eta_d$ de ce polyorganosiloxane (b) est comprise entre 5 et 1000 mPa.s, de préférence entre 10 et 100 mPa.s.

Le groupe L a la même signification que le groupe Z ci-dessus.

Des exemples de motifs de formule (b.1) sont : $H(CH_3)_2SiO_{1/2}$, $HCH_3SiO_{2/2}$ $H(C_6H_5)SiO_{2/2}$.

Les exemples de motifs de formule (b.2) sont les mêmes que ceux donnés plus haut pour les motifs de formule (a.2).

Des exemples de polyorganosiloxane (b) sont :

- les diméthylpolysiloxanes à extrémités hydrogénodiméthylsilyle,
- les copolymères à motifs (diméthyl)-(hydrogénométhyl)polysiloxanes à extrémités triméthylsilyle,

- les copolymères à motifs diméthyl-hydrogénométhylpolysiloxanes à extrémités hydrogénodiméthylsilyle,
- les hydrogénométhylpolysiloxanes à extrémités triméthylsilyle,
- les hydrogénométhylpolysiloxanes cycliques,
- les résines hydrogénosiloxaniques comportant des motifs siloxyles M : $R_3SiO_{1/2}$, Q : $SiO_{4/2}$ et/ou T : $RSiO_{3/2}$, éventuellement D : $-R_2SiO_{2/2}$, avec, R = H ou répondant à la même définition que L.

Comme autres exemples de groupes hydrocarbonés Z ou L, monovalents susceptibles d'être présents dans les POS (a) et (b) susvisés, on peut citer : le méthyle, l'éthyle ; le n-propyle ; l'i-propyle ; le n-butyle ; i-butyle ; t-butyle ; chlorométhyle ; dichlorométhyle ; α-chloroéthyle ; α, β-dichloroéthyle : fluorométhyle ; difluorométhyle ; α, β-difluoroéthyle ; trifluoro-3,3,3-propyle; trifluoro cyclopropyle ; trifluoro-4,4,4 butyle; hexafluoro-3,3,5,5,5,5 pentyle ; β-cyanoéthyle, γ-cyanopropyle ; phényle; p-chlorophényle ; m-chlorophényle : dichloro-3,5-phényle ; trichlorophényle ; tétrachlorophényle ; o-, p- ou m-tolyle ; α, α, α-trifluorotolyle ; xylyle (diméthyle-2,3 phényle ; diméthyle-3,4-phényle).
Ces groupements peuvent être éventuellement halogénés, ou bien encore être choisis parmi les radicaux cyanoalkyles. Les halogènes sont par exemple le fluor, le chlore, le brome et l'iode, de préférence le chlore ou le fluor.
Les POS (a) et (b) peuvent être constitués de mélanges de différentes huiles silicone.

De préférence, les proportions de (a) et de (b) sont telles que le rapport molaire des atomes d'hydrogène liés au silicium dans (b) sur les radicaux alcényles liés au silicium dans (a) est compris entre 0,4 et 10.

La phase silicone de la composition comprend au moins une résine polyorganosiloxane (g), comportant au moins un reste alcényle dans sa structure, et cette résine présente une teneur pondérale en groupe(s) alcényle(s) comprise entre 0,1 et 20 % en poids et, de préférence, entre 0,2 et 10 % en poids.
Ces résines sont des oligomères ou polymères organopolysiloxanes ramifiés bien connus et disponibles dans le commerce. Elles se présentent de préférence sous la forme de solutions siloxaniques. Elles comportent, dans leur structure, au moins deux motifs différents choisis parmi ceux de formule $R_3SiO_{0,5}$ (motif M), $R_2SiO$ (motif D), $RSiO_{1,5}$ (motif T) et $SiO_2$ (motif Q), l'un au moins de ces motifs étant un motif T ou Q.
Les radicaux R sont identiques ou différents et sont choisis parmi les radicaux alkyles linéaires ou ramifiés en $C_1$-$C_6$, les radicaux alcényles en $C_2$-$C_4$ phényle, trifluoro-3,3,3 propyle. On peut citer par exemple : comme radicaux R alkyles, les radicaux méthyle, éthyle, isopropyle, tertiobutyle et n-hexyle, et comme radicaux R alcényles, les radicaux vinyles.
On doit comprendre que dans les résines (g) du type précité, une partie des radicaux R sont des radicaux alcényles.
Comme exemples d'oligomères ou de polymères organopolysiloxanes ramifiés, on peut citer les résines MQ, les résines MDQ, les résines TD et les résines MDT, les fonctions alcényles pouvant être portées par les motifs M, D et/ou T.
Comme exemple de résines qui conviennent particulièrement bien, on peut citer les résines MDQ ou MQ vinylées ayant une teneur pondérale en groupes vinyle comprise entre 0,2 et 10 % en poids, ces groupes vinyle étant portés par les motifs M et/ou D.
Cette résine de structure est avantageusement présente dans une concentration comprise entre 10 et 70 % en poids par rapport à l'ensemble des constituants de la composition, de préférence entre 30 et 60 % en poids et, plus préférentiellement encore, entre 40 et 60 % en poids.

La réaction de polyaddition est bien connue par l'homme du métier. On peut d'ailleurs utiliser un catalyseur dans cette réaction. Ce catalyseur peut notamment être choisi parmi les composés du platine et du rhodium. On peut, en particulier, utiliser les complexes du platine et d'un produit organique décrit dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets US-A-3 419 593, US-A-3 715 334, US-A-3 377 432 et US-A-3 814 730. Le catalyseur généralement préféré est le platine. Dans ce cas, la quantité pondérale de catalyseur (c), calculée en poids de platine-métal, est généralement comprise entre 2 et 400 ppm, de préférence entre 5 et 100 ppm basés sur le poids total des polyorgariosiloxanes (a) et (b).

Conformément à l'invention, on utilise un promoteur d'adhérence. Ce promoteur d'adhérence peut par exemple comprendre :

(d.1) au moins un organosilane alcoxylé répondant à la formule générale suivante :

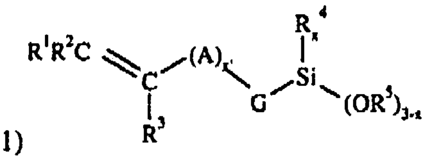

(d.1)

dans laquelle :

- $R^1$, $R^2$, $R^3$ sont des radicaux hydrogénés ou hydrocarbonés identiques ou différents entre eux et représentant l'hydrogène, un alkyle linéaire ramifié en $C_1$ - $C_4$ ou un phényle éventuellement substitué par au moins un alkyle en $C_1$-$C_3$:
- A est un alkylène linéaire ou ramifié en $C_1$ - $C_4$ ;
- G est un lien valenciel ;
- $R^4$ et $R^5$ sont des radicaux identiques ou différents et représentent un alkyle en $C_1$-$C_4$ linéaire ou ramifié ;
- x' = 0 au 1
- x = 0 à 2,

ledit composé (d.1) étant de préférence du vinyltriméthoxysilane (VTMS) ;
(d.2) au moins un composé organosilicié comprenant au moins un radical époxy, ledit composé (d.2) étant de préférence du 3-Glycidoxypropyltiméthoxysilane (GLYMO) ;
(d.3) au moins un chélate de métal M et/ou un alcoxyde métallique de formule générale M $(OJ)_n$, avec n = valence de M et J = alkyle linéaire ou ramifié en $C_1$ - $C_8$, M étant choisi dans le groupe formé par : Ti, Zr, Ge, Li, Mn, Fe, Al, Mg, ledit composé (d.3) étant de préférence du titanate de tert.butyle.

Les proportions des (d.1), (d.2) et (d.3), exprimée en % en poids par rapport au total des trois, sont de préférence les suivantes :

$$(d.1) \geq 10,$$

$$(d.2) \geq 10,$$

$$(d.3) \leq 80.$$

Par ailleurs, ce promoteur d'adhérence (d) est de préférence présent à raison de 0,1 à 10 %, de préférence 0,5 à 5 % et plus préférentiellement encore 1 à 2,5 % en poids par rapport à l'ensemble des constituants de la composition.
La composition élastomère silicone comprend en outre au moins un ralentisseur (f) de la réaction d'addition (inhibiteur de réticulation), choisi parmi les composés suivants :

- polyorganosiloxanes, avantageusement cycliques et substitués par au moins un alcényles, le tétraméthylvinyltétrasiloxane étant particulièrement préféré,
- la pyridine,
- les phosphines et les phosphites organiques,
- les amides insaturés,
- les maléates alkylés
- et les alcools acétyléniques.

Ces alcools acétyléniques, (Cf. FR-B-1 528 464 et FR-A-2 372 874), qui font partie des bloqueurs thermiques de réaction d'hydrosilylation préférés, ont pour formule :

$$R\text{-}(R')C(OH)\text{-}C\equiv CH$$

formule dans laquelle :

- R est un radical alkyle linéaire ou ramifié, ou un radical phényle ;
- R' est H ou un radical alkyle linéaire ou ramifié, ou un radical phényle ;
- les radicaux R, R' et l'atome de carbone situé en $\alpha$ de la triple liaison pouvant éventuellement former un cycle ;
- le nombre total d'atomes de carbone contenu dans R et R' étant d'au moins 5, de préférence de 9 à 20.

Lesdits alcools sont, de préférence, choisis parmi ceux présentant un point d'ébullition supérieur à 250 °C. On peut citer à titre d'exemples :

- l'éthynyl-1-cyclohexanol 1 ;

- le méthyl-3 dodécyne-1 ol-3 ;
- le triméthyl-3,7,11 dodécyne-1 ol-3
- le diphényl-1,1 propyne-2 ol-1 ;
- l'éthyl-3 éthyl-6 nonyne-1 ol-3 ;
- le méthyl-3 pentadécyne-1 ol-3.

Ces alcools $\alpha$-acétyléniques sont des produits du commerce.

Un tel ralentisseur (f) est présent à raison de 3 000 ppm au maximum, de préférence à raison de 100 à 2000 ppm par rapport au poids total des organopolysiloxanes (a) et (b).

Concernant les additifs fonctionnels (h) susceptibles d'être mise en oeuvre, il s'agit de produits choisis parmi les pigments/colorants ou les stabilisants.

L'invention décrit également un système bicomposant précurseur de la composition susévoquée. Ce système bicomposant est caractérisé :

- en ce qu'il se présente en deux parties A et B distinctes destinées à être mélangées pour former la composition en ce que l'une de ces parties A et B comprend le catalyseur (c) et une seule espèce (a) ou (b) de polyorganosiloxane; et
- en ce que la partie A ou B contenant le polyorganosiloxane (b) est exempte de composé (d.3) du promoteur (d).

C'est ainsi que la composition peut, par exemple, être constituée d'une partie A comprenant les composés (d.1) et (d.2) tandis que la partie B contient le composé (d.3).

Pour obtenir la composition élastomère silicone bicomposant A-B.

La viscosité des parties A et B et de leur mélange peut être ajustée en jouant sur les quantités des constituants et en choisissant les polyorganosiloxanes de viscosité différente.

Dans le cas où un ou plusieurs additifs fonctionnels (h) sont employés, ils sont répartis dans les parties A et B selon leur affinité avec le contenu de A et B.

Une fois mélangées l'une à l'autre les parties A et B forment une composition élastomère silicone (RTV-2) prête à l'emploi, qui peut être appliquée sur le support par tout moyen d'imprégnation approprié (par exemple foulardage), et éventuellement tout moyen d'enduction approprié (par exemple racle ou cylindre).

La réticulation de la composition silicone liquide (fluide) appliquée sur le support à imprégner, voire à revêtir, est généralement activée par exemple en chauffant le support imprégné, voire revêtu, à une température comprise entre 50 et 200°C, en tenant bien évidemment compte de la résistance maximale du support à la chaleur.

Suivant un autre de ses aspects, l'invention concerne en l'utilisation d'une composition ou d'un système tels que définis ci-dessus, pour imprégner un support fibreux à l'exception de tout textile architectural.

Par *"textile architectural",* on entend un tissu ou non tissé et plus généralement tout support fibreux destiné après revêtement à la confection :

- d'abris, de structures mobiles, de bâtiments textiles, de cloisons, de portes souples, de bâches, de tentes, de stands ou de chapiteaux ;
- de mobiliers, de bardages, d'écrans publicitaires, de brise-vent ou panneaux filtrants ;
- de protections solaires, de plafonds et de stores.

L'objet de l'invention est constitué par un composite matériau fibreux/élastomère silicone réticulé, à l'exclusion ou non de tout textile architectural tel que défini ci-dessus, caractérisé en ce qu'il comprend au moins un support fibreux imprégné à coeur d'élastomère silicone réticulé obtenu à partir d'une composition silicone liquide ou d'un système bicomposant précurseur de cette composition, tels que définis ci-dessus, cette composition étant fluide et obtenue en ayant recours ni à une dilution, ni à une solubilisation, ni à une émulsification.

A titre d'exemples de composites *matériau fibreux/élastomère silicone réticulé,* on peut citer les matières premières souples pour la confection de sacs gonflables utilisés pour la protection des occupants d'un véhicule, en anglais *"air bag",* les tresses de verre (gaines en tissu de verre de protection thermique et diélectrique pour fil électrique), bandes transporteuses, les tissus coupe-feu ou isolants thermiques, compensateurs (manchons flexibles d'étanchéité pour tuyauterie), vêtements ou bien encore des matériaux souples destinés à être utilisés dans l'architecture textile intérieure ou extérieure (bâches, tentes, stands, chapiteaux...).

Les supports fibreux destinés à être imprégnés peuvent être par exemple des tissus, des non-tissés ou des tricots ou plus généralement tout support fibreux comprenant des fibres choisies dans le groupe de matériaux comprenant : le verre, la silice, les métaux, la céramique, le carbure de silicium, le carbone, le bore ,les fibres naturelles comme le coton, la laine, le chanvre, le lin, les fibres artificielles comme la viscose, ou des fibres cellulosiques, les fibres synthétiques comme les polyesters, les polyamides, les polyacryliques, les chlorofibres, les polyoléfines, les caoutchoucs synthétiques, l'alcool polyvinylique, les aramides, les fluorofibres, les phénoliques...

Le composite *matériau fibreux / élastomère silicone réticulé* susceptible d'être obtenu par imprégnation au moyen de la composition silicone liquide ou du système bicomposant susvisés est caractérisé par une remontée capillaire de moins de 20 mm, de préférence de moins de 10 mm et plus préférentiellement encore égale à 0, la remontée capillaire étant mesurée selon un test T.

**Description des figures :**

- **La figure 1** est un cliché d'une coupe d'un composite de silicone à base de matériau fibreux.
- **La figure 2** est un schéma représentant les résultats d'un test T comparatif de remontée capillaire, effectué sur trois bandes de tissu $\alpha$ (témoin) et $\beta$a, $\beta$b (exemple 1.7).

Les exemples qui suivent ont pour vocation d'illustrer des modes particuliers de réalisation de l'invention sans limiter celle-ci à ces simples modes particuliers.

**EXEMPLE I : Préparation, imprégnation et propriétés d'une composition d'huiles de silicone selon l'invention**

**I.1- Préparation**

Dans un réacteur à température ambiante, on mélange progressivement, dans les proportions indiquées ci-après (parties en poids) :

- 96,6 parties d'une résine M M(Vi) D(Vi) DQ contenant env. 0.6% de Vi
- 11 parties de poly (diMe)(Mehydrogénénosiloxy) $\alpha,\omega$ diMehydrogéno siloxy, de viscosité 25 mPa.s et contenant 20% de SiH
- 0,025 partie d'éthynylcyclohexanol
- 1 partie de vinyltriméthoxysilane
- 1 partie de 3-glycidoxypropyltriméthoxysilane
- 0,4 partie de titanate de butyle
- 0,022 partie de catalyseur de réticulation au platine Karstedt.

Note : Me correspond à un radical méthyle.

**I.2- Propriétés de la composition ainsi préparée** - Viscosité :

On mesure la viscosité de la composition préparée au moyen d'un viscosimètre Brookfield : Viscosité = 2,3 Pa.s

- Réactivité:

La réactivité du bain est appréciée par la mesure de son temps de gel dans un GelTimer GelNorm commercialisé par OSI : Réactivité à 70°C = 30 min

**I.3- Imprégnation**

I.3
.a Un tissu polyester de 200g/m$^2$ est imprégné de la composition au moyen d'une calandre de laboratoire.

Les conditions de l'imprégnation sont les suivantes :

| | |
|---|---|
| - diamètre des cylindres | 10 cm (largeur 25cm) |
| - vitesse de défilement | 1 m/min |
| - pression appliquée | 20kg/cm |
| - taux d'exprimage | 35% |

I.3.b Un tissu de verre de 300 g/m$^2$ est imprégné de la composition au moyen d'une calandre de laboratoire.

Les conditions de l'imprégnation sont les suivantes :

| | |
|---|---|
| - diamètre des cylindres | 10 cm (largeur 25cm) |
| - vitesse de défilement | 1 m/min |
| - pression appliquée | 22 kg/cm |
| - taux d'exprimage | 30 % |

**<u>1.4- Réticulation</u>**

La composition silicone déposée est réticulée en plaçant le composite résultant dans une étuve ventilée à 150°C pendant 1 min.

**<u>I.5- Propriétés mécaniques de l'élastomère silicone d'imprégnation après réticulation</u>**

Les propriétés mécaniques d'usage sont établies selon les normes du métier sur la base de pion de 6mm d'épaisseur pour la dureté et de plaque test de 2mm d'épaisseur pour les expériences en rupture. La réticulation est rendue complète par une cuisson en étuve ventilée de 30min à 150°C.

| | |
|---|---|
| Dureté Shore A | = 33 |
| Résistance à la rupture | = 3,9 MPa |
| Elongation à rupture | = 140 % |

**<u>I.6- Contrôle de l'imprégnation</u>**

On observe la pénétration de la composition dans le tissu par Microscopie Electronique à Balayage.

Le cliché de la figure 1 présente une vue en coupe du composite obtenu à l'exemple L3a. L'échelle correspondante est affichée sur l'image. Il démontre la qualité de l'imprégnation en révélant la compacité du composite résultant. Ce cliché montre la qualité de l'imprégnation obtenue par le procédé objet de l'invention. L'absence de solvant de fluidification ou d'émulsion permet d'éviter la formation de poches de solvant dans la matrice de la composition de silicone réticulée.

**<u>I.7- Résistance à la remontée capillaire</u>**

**Procédure analytique :**

La remontée capillaire est donnée par la hauteur de remontée d'un liquide avec lequel l'extrémité d'une bande de composite est en contact, selon un test T.

**<u>Le test T est conduit comme suit :</u>**

- on découpe une bande de 2 x 20 cm du composite matériau fibreux silicone,
- on prépare un bac contenant une encre colorée (par exemple de l'encre pour stylo plume),
- on suspend verticalement la bande de matériau fibreux découpée au-dessus du bac d'encre de manière à faire affleurer la bande sur l'encre,
- on définit le niveau 0 comme étant la ligne de ménisque de l'encre sur la bande,
- la bande de composite est laissée en place jusqu'à ce que le front de remontée de l'encre s'équilibre,
- on mesure la hauteur (H) en millimètres correspondant à la différence entre le niveau 0 et le niveau de remontée maximal de l'encre le long de la bande.

La remontée capillaire est définie par la distance H.
La résistance à la remontée capillaire est inversement proportionnelle à H.

**Résultats**

Les schémas de la figure 2 représentent comparativement la trace de telles remontées capillaires pour trois

bandes de tissu :

- la bande témoin $\alpha$ de gauche correspond à une bande découpée d'un matériau fibreux non imprégné et enduit de 200g/$m^2$ d'élastomère silicone, sur chaque face ;
- la bande $\beta$a du centre correspond à une bande découpée d'un composite selon l'invention, c'est-à-dire réalisé à partir d'un matériau fibreux à base de polyester, imprégné selon l'invention, puis enduit de 120g/$m^2$ d'élastomère silicone sur chaque face ;
- la bande $\beta$b de droite correspond à une bande découpée d'un composite selon l'invention, c'est-à-dire réalisé à partir d'un matériau fibreux à base de verre, imprégné selon l'invention, puis enduit de 100g/$m^2$ d'élastomère silicone sur chaque face.

Les bandes ($\beta$) de la membrane architecturale silicone (composite) selon l'invention présente une remontée capillaire nulle, tandis que la bande ($\alpha$) témoin présente une remontée capillaire sur plus de 100 mm.

On voit ainsi clairement que l'imprégnation selon l'invention prémunit de la remontée qui se fait sur l'intégralité de l'échantillon en son absence.

On a montré une formulation capable de satisfaire le compromis d'une faible viscosité apte à l'imprégnation de textiles et de propriétés mécaniques suffisantes pour les caractéristiques du composite. On notera que les propriétés atteintes permettent de classer le produit dans la gamme des élastomères ; en particulier l'élongation et la dureté sont typiques de cette classe.

Avec une telle composition, le niveau d'imprégnation du textile est excellent ce qui limite la remontée capillaire par infiltration le long de fibres du tissu qui seraient mal gainées par le polymère hydrophobant.

**EXEMPLE II : Compositions d'huiles silicones fluides selon l'invention**

Les exemples ci-après démontrent qu'avec des compositions très fluides telles que celles présentées, on peut couvrir une large gamme de dureté des élastomères tout en conservant des propriétés mécaniques raisonnables.

Les compositions présentées sont comme dans le premier exemple préparées à froid par simple mélange. Néanmoins leur préparation se fait de manière à disposer de deux parties, A et B, qui sont associées entre elles selon le ratio 100 A / 10 B, juste avant leur utilisation.

Le tableau (I) ci-après décrit ces compositions et les propriétés qu'elles développent.

| **TABLEAU I** | | | | |
|---|---|---|---|---|
| | | **2-1** | **2-2** | **2-3** |
| **Partie A** | | | | |
| Résine M $M^{vi}$ $D^{vi}$ D Q titrant 0.6% Vi, constituée de 17% M 0.5% Mvi, 75% D, 1.5% $D^{vi}$, 6% Q | | 92 | 90 | 45 |
| Poly diMe Me Vi siloxane $\alpha$,$\omega$-vinylé à 2.5% Vi et de viscosité 0.4 Pa.s | | 0 | 0 | 45 |
| Tétra Me, tétra Vi tétrasiloxane | | 0 | 2 | 0 |
| Poly di Me di Me hydrogéno $\alpha$,$\omega$-SiH à 7.5% SiH et 0.3 Pa.s | | 8 | 13 | 0 |
| Poly di Me hydrogéno $\alpha\omega$ $Me_3$ de viscosité 0.02 Pa.s | | 0 | 0 | 8 |
| Tri méthoxysilane de gamma mithacryloxypropyle | | 1 | 1 | 1 |
| Tri méthoxysilane de gamma glycidoxypropyle | | 1 | 1 | 1 |
| Ethynylcyclohexanol | | 250 ppm | 250 ppm | 250 ppm |
| **Partie B** | | | | |
| Résine M $M^{vi}$ $D^{vi}$ D Q titrant 0.6% Vi, constituée de 17% M 0.5% Mvi, 75% D, 1.5% $D^{vi}$, 6% Q | | 96 | 96 | 38 |
| Poly diMe Me Vi siloxane $\alpha\omega$ vinylé à 2.5% Vi et 0.4 Pa.s | | 0 | 0 | 58 |
| Orthotitanate de tétrabutyle | | 4 | 4 | 4 |
| Catalyseur de Karstedt à 10% de platine | | 215 ppm | 215 ppm | 215 ppm |
| Dureté | Shore A | 40 | 45 | 67 |
| Résistance à la rupture | MPa | 3.6 | 4.5 | 0.8 |
| Elongation à la rupture | % | 150 | 100 | 15 |
| Viscosité A | mPa.s | 2760 | 2040 | 2950 |

(suite)

| Partie B | | | | |
|---|---|---|---|---|
| Viscosité B | mPa.s | 4150 | 4190 | 2480 |
| Viscosité A+B | mPa.s | 3400 | 2250 | 2920 |

**Revendications**

1. Composite comprenant au moins un support fibreux, à l'exclusion de tout textile architectural, imprégné à coeur d'élastomère silicone, ledit composite étant obtenu par :

   - imprégnation du support fibreux avec une composition silicone, réticulable en élastomère, consistant en:

     (a) au moins un polyorganosiloxane (POS) présentant, par molécule, au moins deux groupes alcényles, de préférence en $C_2$-$C_6$ liés au silicium ;
     (b) au moins un polyorganosiloxane présentant, par molécule, au moins trois atomes d'hydrogène liés au silicium ;
     (c) une quantité catalytiquement efficace d'au moins un catalyseur, de préférence composé d'au moins un métal appartenant au groupe du platine ;
     (d) au moins un promoteur d'adhérence ;
     (f) au moins un inhibiteur de réticulation ;
     (g) au moins une résine polyorganosiloxane comportant au moins un reste alcényle dans sa structure, et présentant une teneur pondérale en groupe(s) alcényle(s) comprise entre 0,1 et 20 % en poids ;
     (h) éventuellement des additifs fonctionnels pour conférer des propriétés spécifiques choisis parmi les pigments/colorants et les stabilisants;

       → présentant une viscosité dynamique comprise entre 1000 et 7000 mPa.s, à 25°C, et plus préférentiellement comprise entre 2000 et 5000 mPa.s à 25°C avant réticulation,
       → présentant, après réticulation complète par une cuisson en étuve ventilée de 30 minutes à 150°C, au moins l'une des propriétés mécaniques suivantes :

         - une dureté Shore A au moins égale à 2, de préférence comprise entre 5 et 65 ;
         - une résistance à la rupture au moins égale à 0,5 $N.mm^{-1}$, de préférence au moins égale à 1,0 $N.mm^{-1}$ et plus préférentiellement au moins égale à 2 $N.mm^{-1}$ ;
         - une élongation à la rupture au moins égale à 50 %, de préférence au moins égale à 100 % et plus préférentiellement au moins égale à 200 % ;

   - réticulation de ladite composition silicone imprégnant le support.

2. Composite selon la revendication 1, **caractérisé en ce que** la composition silicone est fluide et obtenue en ayant recours ni à une dilution, ni à une solubilisation, ni à une émulsification, et **en ce qu'**elle est apte à imprégner à coeur un matériau fibreux puis à réticuler.

3. Composite selon la revendication 1 ou 2, **caractérisé en ce que** la composition silicone est apte à imprégner à coeur un matériau fibreux puis à réticuler de manière à former un composite ayant une remontée capillaire de moins de 20 mm, de préférence de moins de 10 mm et plus préférentiellement encore égale à 0, la remontée capillaire étant mesurée selon un test T conduit comme suit:

   - on découpe une bande de 2 x 20 cm du composite matériau fibreux silicone,
   - on prépare un bac contenant une encre colorée (par exemple de l'encre pour stylo plume),
   - on suspend verticalement la bande de matériau fibreux découpée au-dessus du bac d'encre de manière à faire affleurer la bande sur l'encre,
   - on définit le niveau 0 comme étant la ligne de ménisque de l'encre sur la bande,
   - la bande de composite est laissée en place jusqu'à ce que le front de remontée de l'encre s'équilibre,
   - on mesure la hauteur (H) en millimètres correspondant à la différence entre le niveau 0 et le niveau de remontée maximal de l'encre le long de la bande,

la remontée capillaire étant définie par la distance H.

**4.** Composite selon l'une quelconque des revendications 1 à 3, **caractérisé en ce que** le polyorganosiloxane (a) de la composition silicone présente des motifs de formule :

$$W_a\, Z_b\, SiO_{(4-(a+b))/2} \qquad (a.1)$$

dans laquelle :

- W est un groupe alcényle,
- Z est un groupe hydrocarboné monovalent, exempt d'action défavorable sur l'activité du catalyseur et choisi parmi les groupes alkyles ayant de 1 à 8 atomes de carbone inclus, éventuellement substitués par au moins un atome d'halogène, et ainsi que parmi les groupes aryles,
- a est 1 ou 2, b est 0, 1 au 2 et a + b est compris entre 1 et 3,
- éventuellement au moins une partie des autres motifs sont des motifs de formule moyenne :

$$Z_c\, SiO_{(4-c)/2} \qquad (a.2)$$

dans laquelle Z a la même signification que ci-dessus et c a une valeur comprise entre 0 et 3.

**5.** Composite selon l'une quelconque des revendications 1 à 4, **caractérisé en ce que** le polyorganosiloxane (b) de la composition silicone comporte le motif siloxyle de formule :

$$H_d\, L_e\, SiO_{(4-(d+e))/2} \qquad (b.1)$$

dans laquelle :

- L est un groupe hydrocarboné monovalent, exempt d'action défavorable sur l'activité du catalyseur et choisi parmi les groupes alkyles ayant de 1 à 8 atomes de carbone inclus, éventuellement substitués par au moins un atome d'halogène, et ainsi que parmi les groupes aryles ;
- d est 1 ou 2, e est 0, 1 ou 2 et d + e a une valeur comprise entre 1 et 3 ;
- éventuellement, au moins une partie des autres motifs étant des motifs de formule moyenne :

$$Lg\, SiO_{(4-g)/2} \qquad (b.2)$$

dans laquelle L a la même signification que ci-dessus et g a une valeur comprise entre 0 et 3.

**6.** Composite selon l'une quelconque des revendications 1 à 5, **caractérisé en ce que** les proportions de (a) et de (b) de la composition silicone sont telles que le rapport molaire des atomes d'hydrogène liés au silicium dans (b) sur les radicaux alcényles liés au silicium dans (a) est compris entre 0,4 et 10.

**7.** Composite selon l'une quelconque des revendications 1 à 6, selon lequel le promoteur d'adhérence de la composition silicone comprend :

(d.1) au moins un organosilane alcoxylé répondant à la formule générale suivante :

(d.1) 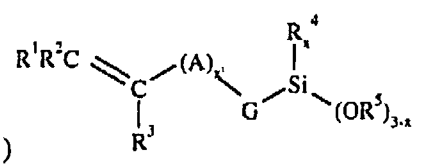

dans laquelle :

- $R^1$, $R^2$, $R^3$ sont des radicaux hydrogénés ou hydrocarbonés identiques ou différents entre eux et représentant l'hydrogène, un alkyle linéaire ou ramifié en $C_1$ - $C_4$ ou un phényle éventuellement substitué par au moins un alkyle en $C_1$-$C_3$ ;

- A est un alkylène linéaire ou ramifié en $C_1$ - $C_4$ ;
- G est un lien valenciel ;
- $R^4$ et $R^5$ sont des radicaux identiques ou différents et représentent un alkyle en $C_1$ - $C_4$ linéaire ou ramifié ;
- x'=0 ou 1
- x = 0 à 2,

ledit composé (d.1) étant de préférence du vinyltriméthoxysilane (VTMS) ;
(d.2) au moins un composé organosilicié comprenant au moins un radical époxy, ledit composé (d.2) étant de préférence du 3-Glycidoxypropyltiméthoxysilane (GLYMO) ;
(d.3) au moins un chélate de métal M et/ou un alcoxyde métallique de formule générale M $(OJ)_n$, avec n = valence de M et J = alkyle linéaire ou ramifié en $C_1$ - $C_8$, M étant choisi dans le groupe formé par : Ti, Zr, Ge, Li, Mn, Fe, Al, Mg,

ledit composé (d.3) étant de préférence du titanate de tert.butyle.

**8.** Composite selon l'une quelconque des revendications 1 à 7, selon lequel le promoteur d'adhérence de la composition silicone est présent à raison de 0,1 à 10 % en poids par rapport l'ensemble des constituants.

**9.** Utilisation d'une composition telle que définie dans l'une des revendications 1 à 8, pour imprégner à coeur un support fibreux à l'exception de tout textile architectural, et obtenir un composite selon l'une quelconque des revendications 1 à 8.

## Patentansprüche

**1.** Verbundstoff, umfassend mindestens einen faserigen Träger, ausgenommen jede Textilarchitektur, der im Kern mit einem Silikonelastomer imprägniert ist, wobei der Verbundstoff erhalten wird durch:

• Imprägnieren des faserigen Trägers mit einer Silikonzusammensetzung, die zu einem Elastomer vernetzbar ist, bestehend aus:

(a) mindestens einem Polyorganosiloxan (POS), das, pro Molekül, mindestens zwei Alkenylgruppen, vorzugsweise $C_2$-$C_6$, gebunden an das Silicium, aufweist;
(b) mindestens einem Polyorganosiloxan, das, pro Molekül, mindestens drei Wasserstoffatome, gebunden an das Silicium, aufweist;
(c) einer katalytisch wirksamen Menge mindestens eines Katalysators, der vorzugsweise aus mindestens einem Metall der Platingruppe gebildet ist;
(d) mindestens einem Adhäsionspromotor;
(f) mindestens einem Vernetzungsinhibitor;
(g) mindestens einem Polyorganosiloxanharz, das mindestens einen Alkenylrest in seiner Struktur umfasst, und einen Gewichtsgehalt an Alkenylgruppe(n) zwischen 0,1 und 20 Gew. -% aufweist;
(h) gegebenenfalls funktionellen Additiven, um spezifische Eigenschaften zu verleihen, die aus Pigmenten/Farbstoffen und Stabilisatoren ausgewählt sind;

→ mit einer dynamischen Viskosität zwischen 1000 und 7000 mPa.s bei 25°C, und weiter bevorzugt zwischen 2000 und 5000 mPa.s bei 25°C vor der Vernetzung,
→ nach der vollständigen Vernetzung durch Backen in einem belüfteten Heizschrank während 30 Minuten bei 150°C, mit mindestens einer der folgenden mechanischen Eigenschaften:

- einer Shore A-Härte von mindestens 2, vorzugsweise zwischen 5 und 65;
- einer Reißfestigkeit von mindestens 0,5 $N.mm^{-1}$, vorzugsweise mindestens 1,0 $N.mm^{-1}$, und weiter bevorzugt mindestens 2 $N.mm^{-1}$;
- einer Reißdehnung von mindestens 50 %, vorzugsweise mindestens 100 %, und weiter bevorzugt mindestens 200 %;

• Vernetzen der Silikonzusammensetzung, die den Träger imprägniert.

**2.** Verbundstoff nach Anspruch 1, **dadurch gekennzeichnet, dass** die Silikonzusammensetzung flüssig ist und erhalten wird, indem weder eine Verdünnung, noch eine Solubilisierung, noch eine Emulgierung vorgenommen wird, und dass dieser geeignet ist, im Kern ein faseriges Material zu imprägnieren und anschließend zu vernetzen.

**3.** Verbundstoff nach Anspruch 1 oder 2, **dadurch gekennzeichnet, dass** die Silikonzusammensetzung geeignet ist, im Kern ein faseriges Material zu imprägnieren und anschließend zu vernetzen, um einen Verbundstoff mit einem kapillaren Anstieg von mindestens 20 mm, vorzugsweise mindestens 10 mm und weiter bevorzugt auch 0 zu bilden, wobei der kapillare Anstieg gemäß einem T-Test gemessen wird, der wie folgt durchgeführt wird:

- ein 2 x 20 cm Band des faserigen Silikonverbundmaterials wird abgeschnitten,
- ein Behälter, der eine gefärbte Tinte enthält (beispielsweise Tinte für eine Füllfeder), wird vorbereitet,
- das abgeschnittene Band des faserigen Materials wird vertikal über dem Tintenbehälter derart aufgehängt, dass das Band auf der Tinte aufliegt,
- das Niveau 0 wird als Meniskuslinie der Tinte auf dem Band definiert,
- das Band des Verbundstoffs wird am Platz gelassen, bis sich die Vorderseite des Anstiegs der Tinte ausgleicht,
- die Höhe (H) wird in Millimetern gemessen, die der Differenz zwischen dem Niveau 0 und dem maximalen Anstieg der Tinte entlang des Bandes entspricht,

wobei der kapillare Anstieg durch die Distanz H definiert wird.

**4.** Verbundstoff nach einem der Ansprüche 1 bis 3, **dadurch gekennzeichnet, dass** das Polyorganosiloxan (a) der Silikonzusammensetzung Einheiten der Formel:

$$W_aZ_bSiO_{(4-(a+b))/2} \qquad (a.1)$$

aufweist, wobei:

- W eine Alkenylgruppe ist,
- Z eine monovalente Kohlenwasserstoffgruppe, ohne nachteilige Wirkung auf die Aktivität des Katalysators ist, und ausgewählt ist aus Akylgruppen mit 1 bis einschließlich 8 Kohlenstoffatomen, gegebenenfalls substituiert durch mindestens ein Halogenatom, sowie aus Arylgruppen,
- a 1 oder 2 ist, b 0, 1 oder 2 ist, und a+b einen Wert zwischen (jeweils einschließlich) 1 und 3 hat,
- gegebenenfalls mindestens ein Teil der anderen Einheiten Einheiten der mittleren Formel

$$Z_cSiO_{(4-c)/2} \qquad (a.2)$$

sind, wobei Z dieselbe Bedeutung hat wie oben und c einen Wert zwischen 0 und 3 hat.

**5.** Verbundstoff nach einem der Ansprüche 1 bis 4, **dadurch gekennzeichnet, dass** das Polyorganosiloxan (b) der Silikonzusammensetzung die Siloxyleinheit der Formel:

$$H_dL_eSiO_{(4-(d+e))/2} \qquad (b.1)$$

umfasst, wobei:

- L eine monovalente Kohlenwasserstoffgruppe, ohne nachteilige Wirkung auf die Aktivität des Katalysators ist, und ausgewählt ist aus Akylgruppen mit 1 bis einschließlich 8 Kohlenstoffatomen, gegebenenfalls substituiert durch mindestens ein Halogenatom, sowie aus Arylgruppen;
- d 1 oder 2 ist, e 0, 1 oder 2 ist, und d+e einen Wert zwischen (jeweils einschließlich) 1 und 3 hat;
- gegebenenfalls mindestens ein Teil der anderen Einheiten Einheiten der mittleren Formel:

$$L_gSiO_{(4-g)/2} \qquad (b.2)$$

sind, wobei L dieselbe Bedeutung hat wie oben und g einen Wert zwischen (jeweils einschließlich) 0 und 3 hat.

**6.** Verbundstoff nach einem der Ansprüche 1 bis 5, **dadurch gekennzeichnet, dass** die Anteile von (a) und (b) der Silikonzusammensetzung derart sind, dass das Molverhältnis der Wasserstoffatome, gebunden an das Silicium in (b), zu den Alkenylresten, gebunden an das Silicium in (a), zwischen 0,4 und 10 beträgt.

**7.** Verbundstoff nach einem der Ansprüche 1 bis 6, wobei der Adhäsionspromotor der Silikonzusammensetzung umfasst:

(d.1) mindestens ein alkoxyliertes Organosiloxan der folgenden allgemeinen Formel:

(d.1) 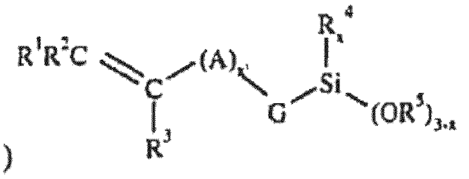

wobei:

- $R^1$, $R^2$, $R^3$ Wasserstoff- oder Kohlenwasserstoffreste sind, die identisch oder voneinander verschieden sind und Wasserstoff, eine lineare oder verzweigte $C_1$-$C_4$-Alkylgruppe oder eine Phenylgruppe, die gegebenenfalls substituiert ist durch mindestens ein $C_1$-$C_3$-Alkylrest, bedeuten;
- A ein lineares oder verzweigtes $C_1$-$C_4$-Alkylen ist;
- G eine Valenzbindung ist;
- $R^4$ und $R^5$ identische oder verschiedene Reste sind und eine lineare oder verzweigte $C_1$-$C_4$-Alkylgruppe bedeuten;
- x' = 0 oder 1;
- x = 0 bis 2;

wobei die Verbindung (d.1) vorzugsweise Vinyltrimethoxysilan (VTMS) ist;
(d.2) mindestens eine Organosiliciumverbindung, umfassend mindestens einen Epoxyrest, wobei die Verbindung (d.2) vorzugsweise 3-Glycidoxypropyltrimethoxysilan (GLYMO) ist;
(d.3) mindestens ein Chelat eines Metalls M und/oder Metallalkoxyds der allgemeinen Formel $M(OJ)_n$, mit n = Valenz von M und J = ein lineares oder verzweigtes $C_1$-$C_8$-Alkyl, wobei M ausgewählt ist aus der Gruppe bestehend aus: Ti, Zr, Ge, Li, Mn, Fe, Al, Mg, wobei die Verbindung (d.3) vorzugsweise tert-Butyltitanat ist.

**8.** Verbundstoff nach einem der Ansprüche 1 bis 7, wobei der Adhäsionspromotor der Silikonzusammensetzung mit 0,1 bis 10 Gew.-%, bezogen auf die gesamten Bestandteile, vorliegt.

**9.** Verwendung einer Zusammensetzung, wie in einem der Ansprüche 1 bis 8 definiert, zum Imprägnieren eines faserigen Trägers im Kern, ausgenommen jede Textilarchitektur, und zum Erhalten eines Verbundstoffs nach einem der Ansprüche 1 bis 8.

## Claims

**1.** A composite comprising at least one fibrous support, excluding any architectural textile, impregnated to the core with a silicone elastomer, said composite being obtained by:

- impregnation of the fibrous support with a silicone composition, crosslinkable into an elastomer, consisting of:

(a) at least one polyorganosiloxane (POS) having, per molecule, at least two alkenyl, preferably $C_2$-$C_6$, groups linked to the silicon;
(b) at least one polyorganosiloxane having, per molecule, at least three hydrogen atoms linked to the silicon;
(c) a catalytically effective quantity of at least one catalyst, preferably composed of at least one metal belonging to the platinum group;
(d) at least one adhesion promoter;
(f) at least one crosslinking inhibitor;
(g) at least one polyorganosiloxane resin containing at least one alkenyl residue in its structure, and having a weight content of alkenyl groups of between 0.1 and 20% by weight;
(h) optionally, functional additives in order to impart specific properties chosen from pigments/dies and stabilizers;

→ having dynamic viscosity of between 1000 and 7000 mPa.s at 25°C and more preferably between 2000 and 5000 mPa.s at 25°C before crosslinking;
→ having, after complete crosslinking by curing in a fan oven for 30 minutes at 150°C, at least one of the following mechanical properties:

- a Shore A hardness of at least two, preferably between 5 and 65,
- a tensile strength of at least 0.5 $N.mm^{-1}$, preferably at least 1.0 $N.mm^{-1}$ and more preferably at least 2 $N.mm^{-1}$;
- an elongation at break of at least 50%, preferably at least 100% and more preferably at least 200%;

▪ crosslinking of said silicone composition impregnating the support.

**2.** Composite according to claim 1, **characterized in that** the silicone composition is fluid and obtained without either diluting or dissolving or emulsifying it, and **in that** it is capable of impregnating a fibrous material right to the core and then of crosslinking.

**3.** Composite according to claim 1 or 2, **characterized in that** the silicon composition is capable of impregnating a fibrous material right to the core and then of crosslinking so as to form a composite having a capillary rise of less than 20 mm, preferably less than 10 mm and more preferably still equal to 0, the capillary rise being measured according to a T test carried out as follows:

- a strip measuring 2 x 20 cm of the fiber/silicone composite was cut;
- a tank containing a colored ink (for example fountain pen ink) was prepared;
- the cut strip of fibrous material was suspended above the ink bath so as to make the strip flush with the ink;
- the 0 level was defined as the meniscus line of the ink on the strip;
- the composite strip was left in place until the rising front of ink was in equilibrium;
- the height (H) in millimeters, corresponding to the difference between the 0 level and the maximum rise level of the ink along the strip, was measured,

the capillary rise being defined by the distance H.

**4.** Composite according to any one of claims 1 to 3, **characterized in that** the polyorganosiloxane (a) of the silicone composition has units of formula:

$$W_aZ_bSiO_{(4-(a+b))/2} \qquad (a.1)$$

in which:

- W is an alkenyl group;
- Z is a monovalent hydrocarbon group, which has no unfavorable effect on the activity of the catalyst and chosen from alkyl groups having from 1 to 8 carbon atoms inclusive, optionally substituted with at least one halogen atom, and from aryl groups;
- a is 1 or 2, b is 0, 1 or 2 and a + b is between 1 and 3; and
- optionally, at least one portion of the other units are units of average formula:

$$Z_cSiO_{(4-c)/2} \qquad (a.2)$$

in which Z has the same meaning as above and c has a value between 0 and 3.

**5.** Composite according to any one of claims 1 to 4, **characterized in that** the polyorganosiloxane (b) of the silicon composition contains siloxyl units of formula:

$$H_dL_eSiO(_{4-(d+e))/2} \qquad (b.1)$$

in which:

- L is a monovalent hydrocarbon group, which has no unfavorable effect on the activity of the catalyst and chosen from alkyl groups having from 1 to 8 carbon atoms inclusive, optionally substituted with at least one

halogen atom, and from aryl groups;
- d is 1 or 2, e is 0, 1 or 2 and d + e has a value between 1 and 3;
- optionally, at least one portion of the other units being units of average formula:

$$L_gSiO_{(4-g)/2} \quad (b.2)$$

in which L has the same meaning as above and g has a value between 0 and 3.

**6.** Composite according to any one of claims 1 to 5, **characterized in that** the proportions of

(a) and of (b) of the silicon composition are such that the molar ratio of the hydrogen atoms linked to the silicon in (b) to the alkenyl radicals linked to the silicon in (a) is between 0.4 and 10.

**7.** Composite according to any one of claims 1 to 6, in which the adhesion promoter of the silicon composition comprises:

(d.1) at least one alkoxylated organosilane satisfying the following general formula:

(d.1) 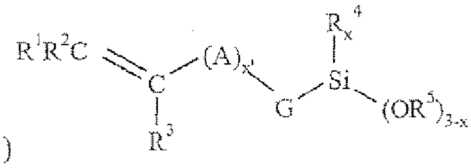

in which:

- $R^1$, $R^2$, $R^3$ are hydrogenated or hydrocarbon radicals, which are the same or differ from one another and represent hydrogen, a $C_1$-$C_4$ linear or branched alkyl or a phenyl optionally substituted with at least one $C_1$-$C_3$ alkyl;
- A is a $C_1$-$C_4$ linear or branched alkylene;
- G is a valency bond;
- $R^4$ and $R^5$ are radicals, which are identical or different and represent a linear or branched $C_1$-$C_4$ alkyl;
- x' = 0 or 1; and
- x = 0 to 2,

said compound (d.1) being preferably vinyltrimethoxysilane (VTMS);
(d.2) at least one organosilicon compound comprising at least one epoxy radical, said compound (d.2) being preferably 3-glycidoxypropyltrimethoxysilane (GLYMO); and
(d.3) at least one metal M chelate and/or a metal alkoxide of general formula $M(OJ)_n$, where n = valency of M and J = $C_1$-$C_8$ linear or branched alkyl, M being chosen from the group formed by: Ti, Zr, Ge, Li, Mn, Fe, Al and Mg,

said compound (d.3) preferably being *tert*-butyl titanate.

**8.** Composite according to any one of claims 1 to 7, in which the adhesion promoter of the silicon composition is present in an amount of 0.1 to 10% by weight relative to all of the constituents.

**9.** The use of a composition as defined in one of claims 1 to 8, for impregnating to the core a fibrous support, excluding any architectural textile, and obtaining a composite according to any one of claims 1 to 8.

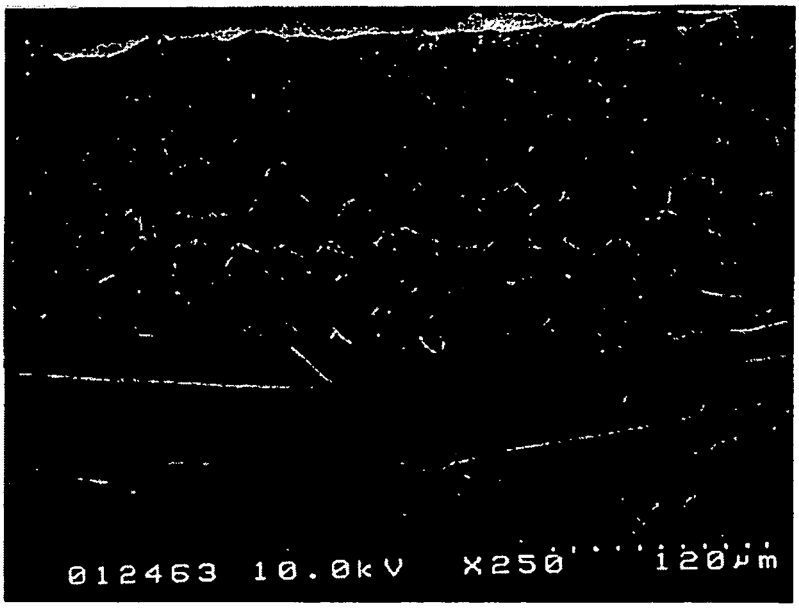


Fig.1

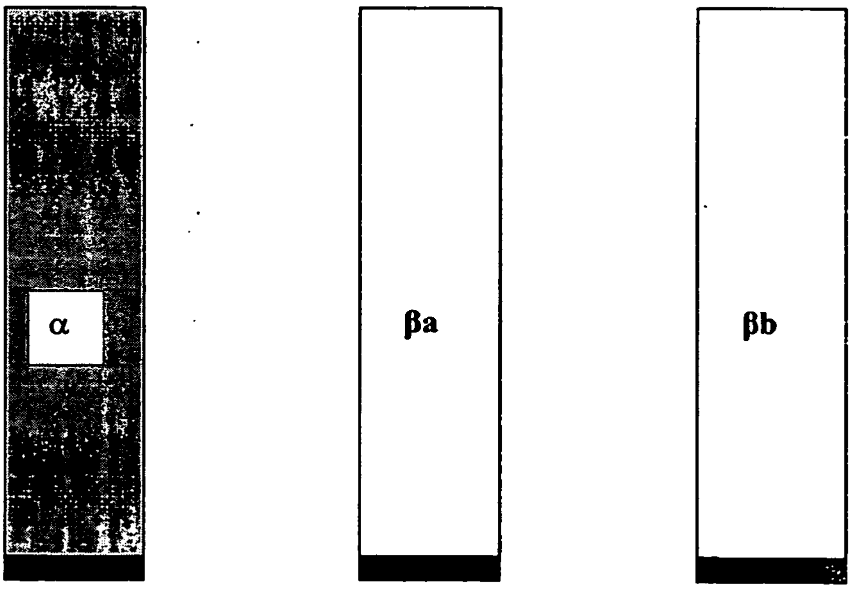


Fig.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 1078823 A
- US 3159601 A
- US 3159602 A
- US 3220972 A
- EP 0057459 A
- EP 0188978 A
- EP 0190530 A
- US 3419593 A
- US 3715334 A
- US 3377432 A
- US 3814730 A
- FR 1528464 B
- FR 2372874 A